# DEMANDE DE BREVET EUROPEEN

(11) **EP 2 811 214 A1**
(43) Date de publication de la demande: **10.12.2014**
(21) Numéro de dépôt: 14166392.2
(22) Date de dépôt: 29.04.2014
(51) Int. Cl.: F16L 37/084, F16L 37/086, F16L 37/098, F16L 37/12

(54) **Raccord encliquetable rapide à verrous à mâchoires symétriques**

(30) Priorité: 04.06.2013 FR 1355143
(71) Demandeur: Nobel Plastiques, 78300 Poissy (FR)
(72) Inventeur: Milhas, Pierre, 51300 Vitry-Le-François (FR); Paquis, Yvon, 51300 Vitry-Le-François (FR); Piette, Gaël, 51300 Dompremy (FR)
(74) Mandataire: Gendron, Vincent Christian

(57) **Abrégé**

Ce accord encliquetable femelle (1) destiné à coopérer avec un embout d'accrochage mâle (20) du type à canon central (26) et collerette (25) comporte un corps (2) formant une cavité cylindrique et sur lequel se fixe un capot (10) formant un logement pour deux pièces de verrou (50) symétriques et disposées tête-bêche, montées coulissantes dans une même direction transversale, chaque pièce de verrou (50) comportant une pièce de manoeuvre (51), une tige de liaison rigide (53) et une mâchoire (52) ainsi que des moyens de ressort (55) pour pousser élastiquement en permanence chaque pièce de verrou (50) dans sa position de repos où la mâchoire (52) est rapprochée de l'axe et où la pièce de manoeuvre (51) est dans sa position la plus radialement extérieure.

## Description

La présente invention concerne un raccord encliquetable femelle destiné à coopérer avec un embout d'accrochage mâle à collerette.

Dans le présent document, on appellera « raccord » cet ensemble de deux éléments mâle-femelle. Il est usuel, notamment dans l'industrie automobile, d'utiliser de tels raccords encliquetables pour réaliser la connexion rapide et démontable d'un élément de circuit de fluide (par exemple carburant, huile ou eau) à un autre élément de circuit. De façon sensiblement normalisée, l'industrie utilise des embouts mâles comportant un canon cylindrique entouré d'une collerette, et les raccords femelles comportent une cavité cylindrique destinée à recevoir au moins l'extrémité du canon et un verrou élastique destiné à venir bloquer l'arrière de la collerette une fois que celle-ci est en place. Des joints toriques assurent l'étanchéité autour de l'embout mâle.

Le document EP 0 605 801 A fait connaître un raccord dont le verrou est symétrique et disposé transversalement dans un logement de verrou formé entre l'ouverture de la cavité cylindrique du corps et un anneau rigide d'entrée du corps placé à distance devant l'ouverture de la cavité cylindrique du corps et solidaire du corps. La pièce de verrou est en ovale ou en losange élastiquement déformable et comporte à deux sommets opposés deux pièces de manoeuvre et aux deux autres sommets deux mâchoires. Les pièces de manoeuvre affleurent, en position de repos, au niveau de l'enveloppe extérieure du corps, de manière à être accessible à deux doigts opposés d'un utilisateur. Quand l'utilisateur enfonce ces pièces radialement vers l'intérieur, la pièce de verrou se déforme et écarte latéralement l'une de l'autre les deux mâchoires, et les écarte de l'axe du corps de sorte que les mâchoires s'escamotent et libèrent la région centrale voisine de la périphérie de l'embout mâle et permettent de dégager la collerette et donc l'embout mâle.

La pièce de verrou unique en losange s'avère à l'usage relativement fragile. Pour permettre son fonctionnement élastique, il est nécessaire de prévoir des parties de liaison pas trop épaisses ni trop rigides, mais de ce fait, les mâchoires peuvent être insuffisamment maintenues et ne pas exercer sur la collerette d'un embout une force suffisante évitant l'arrachement de l'embout.

Le but de l'invention est d'améliorer un raccord de ce type par une construction permettant une plus grande solidité et une résistance accrue des mâchoires à l'arrachement.

L'invention atteint son but grâce à un raccord encliquetable femelle destiné à coopérer avec un embout d'accrochage mâle du type à canon central et collerette, le raccord comportant d'une part un corps réalisé en une matière plastique rigide et comprenant d'un côté une partie tubulaire de liaison à une conduite et de l'autre côté une partie formant une cavité cylindrique ouverte destinée à recevoir au moins l'extrémité du canon, et un anneau rigide d'entrée du corps placé à courte distance devant l'ouverture de la cavité cylindrique du corps, tandis qu'un verrou, réalisé en matière rigide et destiné à venir bloquer la collerette d'embout en arrière (en arrière par rapport à la direction d'introduction de l'embout, mais en avant si l'on se réfère à l'orientation globale du raccord) une fois que celle-ci est en place dans la cavité cylindrique, est disposé transversalement dans un logement de verrou entre l'ouverture de la cavité cylindrique du corps et ledit anneau rigide d'entrée, le verrou étant symétrique et comprenant deux mâchoires courbes radialement opposées susceptibles d'être rapprochées ou écartées l'une de l'autre et de l'axe du corps sous l'action de deux pièces de manoeuvre radialement opposées affleurant en position de repos au niveau de l'enveloppe extérieure du corps de manière à être accessible à deux doigts opposés d'un utilisateur, les mâchoires étant rappelées élastiquement en position rapprochée de repos dans laquelle elles forment une butée radiale à l'arrière de la collerette d'embout quand celui-ci est mis en place, les mâchoires permettant d'escamoter radialement vers l'extérieur cette butée radiale quand elles sont poussées en position écartée d'escamotage par les pièces de manoeuvre quand celles-ci sont enfoncées par l'utilisateur, caractérisé en ce que le verrou est constitué par deux pièces de verrou symétriques disposées tête-bêche et coulissant en sens inverse dans une même direction transversale, chaque pièce de verrou étant disposée dans ladite direction transversale et comportant une pièce de manoeuvre orthogonale à ladite direction transversale reliée rigidement par une tige de liaison rigide à une mâchoire également sensiblement globalement orthogonale à ladite direction transversale, des moyens de coulissement et de butée étant formés dans le logement de verrou pour permettre le coulissement tête-bêche de chaque pièce de verrou sur une course limitée entre les positions de repos et d'escamotage des mâchoires, des moyens de ressort étant prévus entre chaque pièce de verrou et un organe d'appui environnant pour pousser élastiquement en permanence chaque pièce de verrou dans sa position de repos où la mâchoire est rapprochée de l'axe et où la pièce de manoeuvre est dans sa position la plus radialement extérieure.

Grâce à cette disposition, chaque pièce de verrou est une pièce qui peut être construite de manière très robuste et les mâchoires peuvent être très résistantes.

L'organe d'appui environnant mentionné plus haut sur lequel s'appuient les moyens de ressort qui poussent élastiquement chaque pièce de verrou peut être un élément fixe lié au corps du raccord. Mais selon une disposition préférée de l'invention, l'organe environnant est en fait une partie de la pièce de verrou antagoniste mobile ; de cette manière, quand l'utilisateur presse les deux pièces de manoeuvre, il diminue la distance entre les points d'appui du ressort et en augmente d'autant deux fois plus vite la force de réaction élastique.

Plus particulièrement, les moyens de ressort d'une pièce de verrou s'appuient d'une part sur une partie extérieure de la mâchoire courbe de ladite pièce de verrou et d'autre part sur une partie intérieure de la partie de manoeuvre de l'autre pièce de verrou disposée tête-bêche.

Les moyens de ressorts peuvent être de tout type, par exemple un ressort hélicoïdal placé entre les deux points d'appui. Plus avantageusement, les moyens de ressort sont constitués par un ressort à lame courbe disposé tangentiellement sur un côté de la mâchoire et s'en éloignant progressivement.

Les moyens de ressort peuvent être des pièces distinctes de la pièce de verrou, qui viennent simplement s'appuyer sur elle ou lui être fixée. Mais avantageusement, dans le cas où la mâchoire est en plastique moulé, le ressort est une lame courbe venue de moulage avec la mâchoire. En fait toute la pièce de verrou peut être avantageusement moulée. Dans ce cas, il est avantageux d'utiliser une technique de moulage à deux matières, (par exemple surmoulage ou injection bi-matière) pour réaliser la partie de ressort dans une matière bien adaptée, plus élastique que la matière servant au moulage de la partie de base de la mâchoire.

Avantageusement, le logement de verrou formé entre l'ouverture de la cavité cylindrique du corps et l'anneau rigide d'entrée est réalisé par un capot comprenant une paroi de couvercle formant ledit anneau rigide d'entrée. Ce capot vient se fixer au devant du corps et son couvercle (ou fond) ; il comprend un passage centrale et forme l'anneau rigide mentionné plus haut, qui sert de paroi au logement du verrou.

Le capot peut être solidarisé au corps par divers moyens, par exemple par soudage, mais avantageusement, il est fixé par encliquetage grâce à des crochets et des éléments d'accrochage formés sur le corps et sur le capot, ou inversement sur le capot et le corps. Les éléments d'accrochage coopérant avec les crochets peuvent être des orifices, encoches, reliefs, formés dans une paroi du capot. Avantageusement, les crochets et les éléments d'accrochage sont prévus pour le démontage du capot ne soit pas possible.

Avantageusement, il est prévu des moyens de détrompage du capot sur le corps, par exemple en réalisant le capot avec différents coloris par rapport au corps.

Avantageusement, la cavité cylindrique du corps comporte une première section cylindrique allant de l'ouverture de la cavité cylindrique à une nervure torique destinée à recevoir l'extrémité de l'embout mâle, la première section cylindrique étant de diamètre supérieur à celui de l'embout mâle et logeant au moins un joint torique, un anneau entretoise et un anneau obturateur.

Il est prévu de préférence deux joints toriques séparés par l'anneau entretoise qui est monté dans la première section cylindrique. L'anneau obturateur est quant à lui monté à force dans la première section cylindrique pour bloquer les joints toriques et l'anneau entretoise. Il peut comprendre sur sa périphérie des reliefs, par exemple des cannelures, facilitant son montage à force.

La cavité cylindrique peut comprendre des gradins formant des butées pour certains des éléments précités, par exemple l'anneau obturateur.

D'autres caractéristiques et avantages de l'invention ressortiront de la description suivante d'un exemple de réalisation. Il sera fait référence aux dessins annexés sur lesquels :
La figure 1 est une vue en perspective du raccord de l'invention à l'état monté.
La figure 2 est une vue en perspective éclatée du raccord de la figure 1 à l'état non monté.
La figure 3 est une vue en coupe longitudinale du raccord de la figure 1 à l'état monté, avec l'embout mâle monté dans le raccord.
La figure 4 représente en perspective le capot du raccord de l'invention, à l'état isolé.
Les figures 5 et 6 représentent, en coupe frontale A-A de la figure 3 à travers le raccord, le détail du mécanisme des deux mâchoires symétriques de l'invention, respectivement en position fermée de repos et en position ouverte de dégagement.
La figure 7 est un schéma représentant en coupe frontale vue de gauche le capot, une pièce de verrou et les organes de guidage de la pièce de verrou.

Le raccord rapide 1 comprend essentiellement un corps 2 qui comporte à l'arrière une partie tubulaire sous forme de queue creuse 3 et à l'avant une cavité ou chambre cylindrique 4 par où doit s'engager un embout mâle 20 formé d'un canon 26 muni d'une collerette d'encliquetage 25. La queue 3 peut comporter sur sa surface extérieure des profils de connexion non représentés, par exemple en dents de sapin ou à simple ou double bulbe, pour s'engager à force dans une conduite, ou peut être solidarisée par soudure (par rotation, par ultra-sons, induction ou laser) sur un tube ou un autre élément. Un capot 10 vient s'encliqueter sur l'avant du corps 2 pour former un logement de verrou transversal qui sera décrit en détail plus loin.

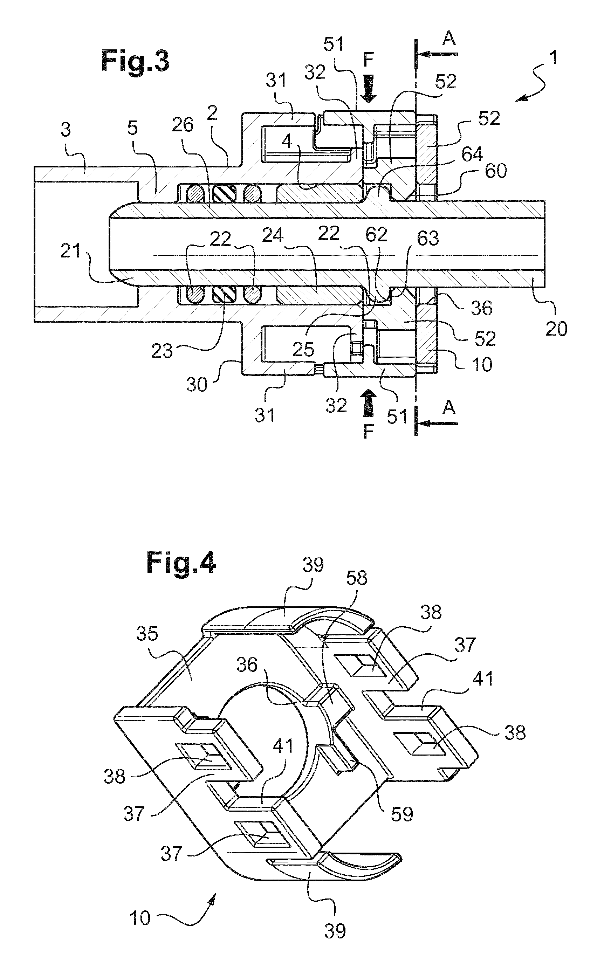

Comme le montre la figure 3, la chambre cylindrique 4 est séparée du volume cylindrique intérieur de la queue 3 par une nervure torique 5, définissant un passage cylindrique de diamètre intérieur adapté pour être traversé par l'extrémité distale 21 de l'embout mâle 20. La chambre cylindrique 4 peut recevoir deux joints toriques 22 séparés par une entretoise 23 de joint, ainsi qu'un anneau obturateur 24 cranté axialement sur sa périphérie de manière à s'engager à force dans la chambre 4 et s'y fixer au ras de l'ouverture de la chambre 4. Pour la facilité de lecture du dessin, on a représenté les éléments 22-23-22-24 séparés, mais il est entendu qu'une fois montés, ils sont en appui les uns sur les autres. Les éléments toriques 22-24 sont traversés par l'embout mâle 20 qui vient s'appuyer avec sa collerette 25 au voisinage de l'anneau obturateur 24, voire s'appuie sur lui. Un épaulement non représenté peut être formé dans la cavité cylindrique pour fixer une butée de la position de l'anneau obturateur 24.

Le corps 2 comporte à l'extérieur et vers sa partie avant un élargissement sous forme d'une plate-forme 30 carrée sur laquelle s'élèvent des parois opposées courtes 31. Un pilier 40 s'élève vers l'avant du corps 2 à partir des deux côtés opposés de la plate-forme 30 qui ne portent pas les parois courtes 31. La chambre 4 forme aussi à son embouchure avant une platine transversale carrée 32, parallèle à la plate-forme 30 mais légèrement plus petite. Deux crochets d'encliquetage 33 sont formés de chaque côté sur des piliers reliant 34 reliant la plate-forme 30 et la platine 32.

Le capot 10 comporte une paroi avant transversale de couvercle 35 avec un passage central 36 pour laisser passer sans contact l'embout mâle 20. Cette paroi 35 forme l'anneau rigide d'entrée de corps mentionné en tête de ce document. Deux parois latérales opposées 37 sont munies d'ouvertures 38 destinées à coopérer avec les crochets d'encliquetage 33 quand le capot est positionné sur l'avant du corps 2. Les ouvertures 38 sont séparées par une encoche 41 destinée à coopérer en guidage longitudinal avec les piliers 40. Les parois latérales opposées planes 37 se poursuivent d'un côté par une paroi en quart de cercle 39.

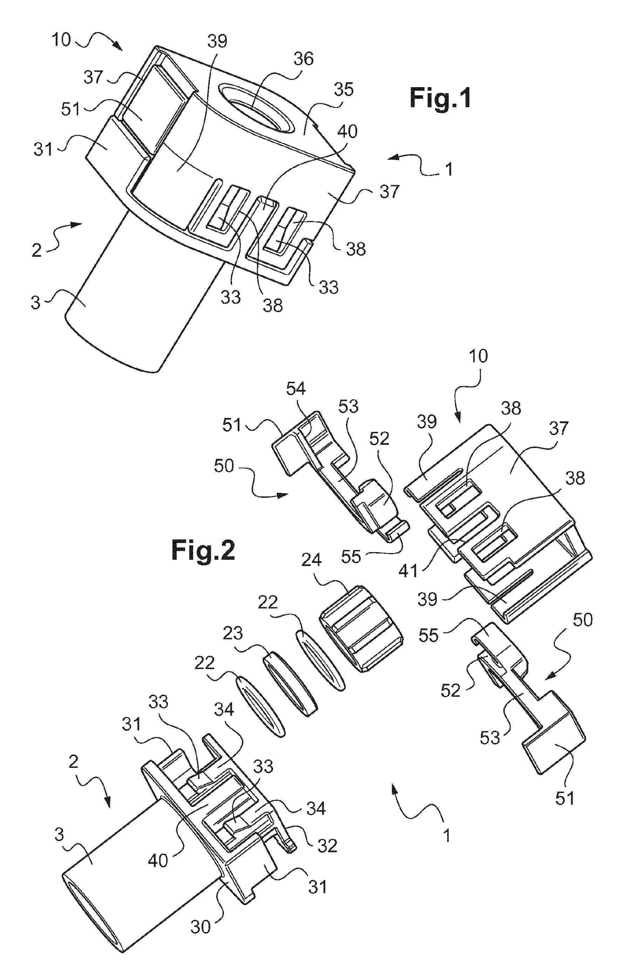

Quand le capot 10 est engagé sur l'avant du corps 2 et s'encliquète sur lui, son couvercle 35 reste bloqué à une certaine distance de la platine 32, ménageant entre ces deux éléments un espace destiné au logement du verrou. Comme on le voit sur la figure 1, les parois latérales courtes 31 ferment partiellement l'espace latéral entre le bord de la paroi incurvée 39 et le bord de la paroi opposée 37, ce qui laisse deux ouvertures rectangulaires latérales opposées qui laissent apparaître le bouton carré de manoeuvre 51 du verrou de blocage, qui affleure en position de repos à la surface de l'enveloppe du raccord (constitué du corps et du capot). Dans une variante de réalisation, on peut réaliser les parois 31 non pas sur le corps 2 mais sur le capot 10, ce qui confère à celui-ci une meilleure rigidité et une résistance accrue à l'arrachement.

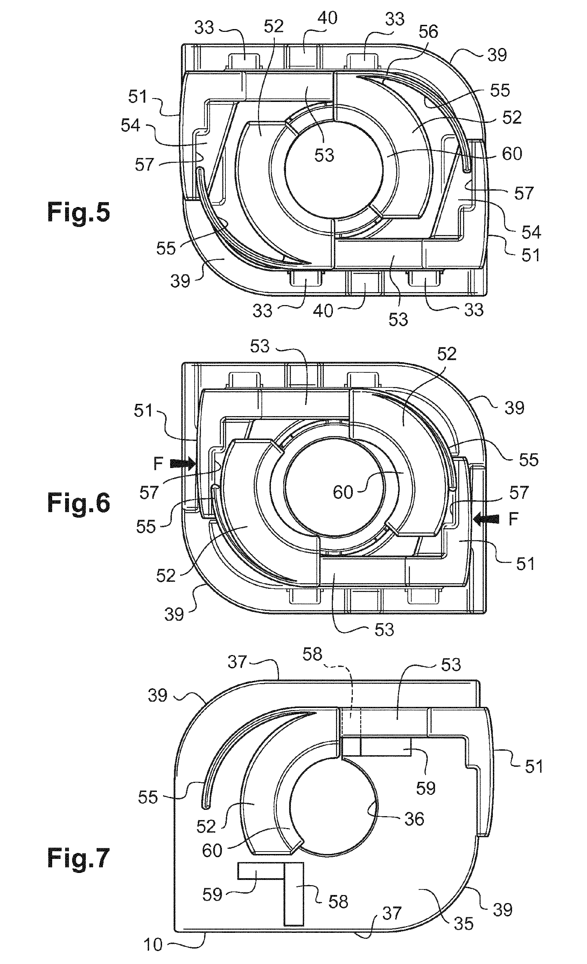

Le verrou est constitué de deux pièces 50 de verrou identiques coopérant entre elles et montées dans leur logement, les deux pièces étant mobiles dans une direction transversale qui correspond à la direction horizontale du plan des figures 5, 6 et à la direction verticale du plan de la figure 3. Elles comportent une partie de mâchoire courbe 52 formée par une pièce forte en arc de cercle d'un peu plus de 90° disposée dans un plan transversal du dispositif et globalement orthogonale à la direction de coulissement transversale des pièces de verrou. La mâchoire 52 est reliée par une tige 53 au bouton de manoeuvre 51, lequel est placé en porte-à-faux à l'extrémité de la tige 53 ; des nervures de renforcement 54 assurent la solidité de la structure.

Par ailleurs une lame courbe de ressort 55 vient de moulage avec le reste de la pièce de verrou 50. Le pied 56 de cette lame 55 tangente la mâchoire 52 à son extrémité près de la tige 53, et la lame suit avec une distance croissante le pourtour de la mâchoire 52. L'extrémité de la lame de ressort 55, après changé de direction d'environ 90°, vient s'appuyer sur une face interne 57 du bouton de manoeuvre 51 de l'autre pièce de verrou 50 (la pièce antagoniste) disposée tête-bêche par rapport à la première. La lame 55 est préchargée de sorte qu'elle tend à s'éloigner élastiquement de la mâchoire 52 à laquelle elle est associée.

Sur la figure 5, les deux pièces de verrou 50 sont en position de repos, écartées symétriquement l'une de l'autre au maximum. Dans cette position d'écart maximum des pièces 50 au niveau de leur boutons de manoeuvre 51 dont la face externe affleure la surface latérale du capot 10, les mâchoires 52 sont au contraire dans leur position la plus rapprochée, concentriquement. Cette position de repos est définie par la coopération d'un relief des pièces 50 et de deux butées 58 (figures 4 et 7) formées dans le capot 10, à l'intérieur de sa paroi de couvercle 35, au voisinage du passage central 36. Dans cette position rapprochée, les mâchoires 52 définissent entre elles un anneau interrompu de diamètre intérieur compris entre le diamètre externe de l'embout mâle 20 et celui de la collerette 25, de sorte que dans la position représentée sur les figures 3 et 5, la collerette 25 est empêchée de se dégager vers l'avant du raccord (vers l'arrière de l'embout par rapport à sa direction d'introduction). Elle est donc bloquée axialement des deux côtés, ce qui assure la fixation de l'embout 20 dans le raccord.

Les moyens de guidage des pièces de verrou 50 sont illustrés schématiquement par la figure 7 (on a représenté une seule des deux pièces de verrou 50 pour simplifier la figure) : on voit, au voisinage de l'ouverture centrale 36 du couvercle 35 de capot 10, les deux butées transversales 58 (orthogonales aux parois 37) et deux glissières 59 (parallèles aux parois 37) qui coopèrent avec la tige 53 de la pièce de verrou 50. La tige 53 coulisse entre la paroi 37 et la glissière 59. Un évidement non représenté sous la tige 53 définit en coopération avec la butée 58 la course transversale de la pièce de verrou 50. Bien sûr, les butées de courses peuvent être obtenues par d'autres moyens.

Si l'utilisateur appuie simultanément sur les deux boutons poussoirs 51 des verrous 50, selon les flèches F des figures 3 ou 6, chacune des pièces 50 va coulisser transversalement, en étant guidée par les glissières 59 prévues sur le capot (figure 4). Les deux pièces 50 vont se rapprocher globalement jusqu'à venir buter en fin de course par leur relief ad hoc sur la butée 58, mais, ce faisant, les deux mâchoires 52 vont s'écarter l'une de l'autre, dans la position représentée en figure 6, qui permet alors, grâce à cet escamotage, le passage de la collerette 25 en avant du corps entre les deux mâchoires 52. Lors de ce mouvement, les ressorts 55 se rapprochent élastiquement du pourtour courbe des mâchoires 52 en continuant d'appuyer sur les portées 57 à l'intérieur des boutons poussoirs 51 opposés.

Il suffit à l'utilisateur de relâcher la pression manuelle sur les deux boutons poussoirs 51 pour que les deux pièces de verrou 50, sous la force élastique des ressorts 55, reprennent leur position globalement éloignée des la figure 5, qui est la position de repos et de blocage d'embout.

Comme on le voit sur la section des mâchoires 52 en figure 3, chaque mâchoire arquée 52 comprend une partie d'attaque de diamètre interne réduit formant un chanfrein conique 60, suivie d'un élargissement cylindrique 61 dont la face avant 62 forme un épaulement de butée transversale pour la collerette 25 qui comprend aussi vers l'avant du raccord une face de butée 63 sensiblement transversale tandis que sa face arrière 64 est inclinée et destinée à glisser sur le chanfrein d'attaque 60 des mâchoires, ce qui permet aux mâchoires de s'ouvrir automatiquement lors de l'introduction de l'embout 20, l'embout 20 étant ensuite retenu par la coopération des deux faces transversales 63, 62 en butée l'une sur l'autre.

Le corps 2, le capot 10 et les pièces de verrou 50 sont avantageusement réalisées en plastique moulé, le plastique pouvant être différent pour les différentes pièces.

## Revendications

1. Raccord encliquetable femelle (1) destiné à coopérer avec un embout d'accrochage mâle (20) du type à canon central (26) et collerette (25), le raccord (1) comportant d'une part un corps (2) réalisé en une matière plastique rigide et comprenant d'un côté une partie tubulaire (3) de liaison à une conduite et de l'autre côté une partie formant une cavité cylindrique (4) ouverte destinée à recevoir au moins l'extrémité du canon (26), et un anneau rigide (35) d'entrée du corps placé à courte distance devant l'ouverture de la cavité cylindrique (4) du corps, tandis qu'un verrou (50), réalisé en matière rigide et destiné à venir bloquer en arrière la collerette (25) d'embout une fois que celle-ci est en place dans la cavité cylindrique, est disposé transversalement dans un logement de verrou entre l'ouverture de la cavité cylindrique (4) du corps et ledit anneau rigide (35) d'entrée, le verrou (50) étant symétrique et comprenant deux mâchoires courbes (52) radialement opposées susceptibles d'être rapprochées ou écartées l'une de l'autre et de l'axe du corps (2) sous l'action de deux pièces de manoeuvre (51) radialement opposées affleurant en position de repos au niveau de l'enveloppe extérieure du corps (2) de manière à être accessible à deux doigts opposés d'un utilisateur, les mâchoires (52) étant rappelées élastiquement en position rapprochée de repos dans laquelle elles forment une butée radiale (63) à l'arrière de la collerette (25) d'embout quand celui-ci est mis en place, les mâchoires (52) permettant d'escamoter radialement vers l'extérieur cette butée radiale (63) quand elles sont poussées en position écartée par les pièces de manoeuvre (51), **caractérisé en ce que** le verrou est constitué par deux pièces de verrou symétriques (50) disposées tête-bêche et coulissant en sens inverse dans une même direction transversale, chaque pièce de verrou (50) étant disposée dans ladite direction transversale et comportant une pièce de manoeuvre (51), orthogonale à ladite direction transversale, reliée rigidement par une tige de liaison rigide (53) à une mâchoire (52) également orthogonale à ladite direction transversale, des moyens de coulissement (58) et de butée (59) étant formés dans le logement de verrou pour permettre le coulissement tête-bêche de chaque pièce de verrou (50) sur une course limitée entre les positions de repos et d'escamotage des mâchoires (52), des moyens de ressort (55) étant prévus entre chaque pièce de verrou (50) et un organe d'appui environnant (57) pour pousser élastiquement en permanence chaque pièce de verrou (50) dans sa position de repos où la mâchoire (52) est rapprochée de l'axe et où la pièce de manoeuvre (51) est dans sa position la plus radialement extérieure.

2. Raccord selon la revendication 1, **caractérisé en ce que** l'organe d'appui environnant (57) est une partie de la pièce de verrou antagoniste (50).

3. Raccord selon la revendication 1 ou 2, **caractérisé en ce que** les moyens de ressort (55) d'une pièce de verrou (50) s'appuient d'une part sur une partie extérieure de la mâchoire courbe (52) de ladite pièce de verrou (50) et d'autre part sur une partie intérieure (57) de la partie de manoeuvre (51) de l'autre pièce de verrou (50) antagoniste disposée tête-bêche.

4. Raccord selon l'une quelconque des revendications 1 à 3, **caractérisé en ce que** les moyens de ressort (55) sont constitués par un ressort à lame courbe disposé tangentiellement sur un côté de la mâchoire (52) et s'en éloignant progressivement.

5. Raccord selon l'une quelconque des revendications 1 à 4, **caractérisé en ce que** la mâchoire (52) est en plastique moulé et les moyens de ressort (55) sont une lame courbe venue de moulage avec la mâchoire (52).

6. Raccord selon la revendication 5, **caractérisé en ce que** la mâchoire et la lame courbe de ressort sont réalisés en moulage de deux matières.

7. Raccord selon l'une quelconque des revendications 1 à 6, **caractérisé en ce que** le logement de verrou est réalisé par un capot (10) comprenant une paroi de couvercle (37) formant ledit anneau rigide d'entrée.

8. Raccord selon la revendication 7, **caractérisé en ce que** le capot (10) est solidarisé au corps (2) par encliquetage grâce à des crochets (33) et des éléments d'accrochage (34) formés sur le corps (2) et sur le capot (10, ou inversement sur le capot (10) et le corps (2).

9. Raccord selon l'une quelconque des revendications 1 à 8, **caractérisé en ce que** la cavité cylindrique du corps comporte une première section cylindrique allant de l'ouverture de la cavité cylindrique à une nervure torique (5) destinée à recevoir l'extrémité (21) de l'embout mâle (20), la première section cylindrique étant de diamètre supérieur à celui de l'embout mâle (20) et logeant au moins un joint torique (22), un anneau entretoise (23) et un anneau obturateur (24).

10. Raccord selon la revendication 9, **caractérisé en ce que** l'anneau obturateur (24) est monté à force dans la première section cylindrique pour bloquer le joint torique (22) et l'anneau entretoise (23).
